# FASCICULE DE BREVET EUROPEEN

(11) **EP 1 066 611 B1**
(45) Date de publication et mention de la délivrance du brevet: **13.08.2003**
(21) Numéro de dépôt: 99907683.9
(22) Date de dépôt: 11.03.1999
(51) Int. Cl.: G08B 3/10

(54) **ALARME SONORE POUR TELEPHONE PORTABLE OU RECEPTEUR DE MESSAGES**
TONALARM FÜR EIN TRAGBARES TELEFON ODER EINEN ANRUFEMPFÄNGER
AUDIBLE ALARM FOR PORTABLE TELEPHONE OR MESSAGE RECEIVER

(30) Priorité: 24.03.1998 FR 9803857
(43) Date de publication de la demande: 10.01.2001
(73) Titulaire: Digiplug - S.a.r.l., 75001 Paris (FR)
(72) Inventeur: FITOUSSI, Raphael, F-69007 Lyon (FR); LAVEISSIERE, Christian, F-34270 Saint Mathieu de Treviers (FR); BOHBOT, Stéphane, F-75019 Paris (FR)
(74) Mandataire: Grynwald, Albert
(86) Numéro de dépôt international: FR9900540
(87) Numéro de publication internationale: WO99049434

(56) Documents cités:
- EP-A- 0 538 933
- EP-A- 0 660 281
- WO-A-92/03891
- WO-A-93/01662
- FR-A- 2 725 574
- GB-A- 2 245 091
- GB-A- 2 267 794
- US-A- 4 868 561
- US-A- 5 307 059

## Description

L'invention est relative à une alarme sonore pour téléphone portable ou récepteur de messages.

Les téléphones portables disposent de sonneries très similaires. Ainsi, toutes les personnes possédant un téléphone portable (ou "portable") sont sollicitées par des sonneries presque identiques qui ne permettent pas réellement d'identifier celle de leur portable. Lorsque plusieurs portables se trouvent à proximité les uns des autres et que l'un de ceux-ci est appelé, en général toutes les personnes concernées ont l'impression qu'elles sont sollicitées, alors que c'est seulement l'une d'entre elles qui est appelée. De même, les récepteurs de messages ou "pageurs", qui se distinguent des téléphones par le fait qu'ils sont simplement récepteurs et non émetteurs, disposent tous de sonneries semblables qui provoquent les mêmes inconvénients.

Pour remédier à cet inconvénient, on a déjà proposé un portable ou récepteur de messages contenant une mémoire dans laquelle peuvent être chargés des sons, combinaisons de sons, ou chansons permettant de personnaliser l'alarme sonore.

Dans ce qui suit, pour simplifier, on fera seulement référence aux téléphones portables.

L'invention résulte de la constatation que l'appareil connu présente l'inconvénient de nécessiter, pour la sélection et l'enregistrement, une connaissance et une manipulation qui peuvent être ressenties comme complexes par certains utilisateurs. En effet, un téléphone et un récepteur de message constituant des appareils d'usage courant, il est nécessaire qu'ils soient d'une maniabilité la plus simple possible. On a aussi constaté que, lorsque plusieurs personnes sont susceptibles d'utiliser le même téléphone portable ou récepteur, l'alarme personnalisée pour un utilisateur n'est pas forcément adaptée au co-utilisateur du téléphone, mais que la complexité relative de la modification de l'enregistrement empêche ce dernier de personnaliser son alarme.

L'invention remédie à cet inconvénient.

Elle est caractérisée en ce que l'alarme sonore pour portable ou récepteur comprend une mémoire contenant un signal sonore personnalisé ou personnalisable, qui est interchangeable, avantageusement enfichable.

Ainsi, l'utilisateur peut aisément choisir et changer son alarme sonore, de la même manière qu'on peut choisir et changer un disque ou une cassette dans un lecteur de disque ou de cassette.

L'invention concerne aussi une mémoire contenant un signal sonore personnalisé ou personnalisable pour téléphone portable ou récepteur de messages. De telles mémoires sont soit préenregistrées, soit enregistrables.

Il est vrai que, dans le cas d'une mémoire enregistrable, il est nécessaire de procéder à l'enregistrement et que ce dernier présente l'inconvénient mentionné ci-dessus de constituer une opération ressentie comme complexe. Toutefois, contrairement au récepteur ou téléphone connus, dans lequel la mémoire prévue pour l'alarme n'est pas amovible, le co-utilisateur n'a pas besoin de reprogrammer son alarme à chaque fois qu'il prend possession du téléphone portable. Il suffit qu'il dispose de sa propre mémoire qu'il aura enregistré une seule fois.

On peut aussi noter que la facilité d'utilisation conférée par les mémoires amovibles, préenregistrées ou enregistrables, permet de considérer le téléphone et son alarme comme ayant, outre sa fonction de téléphone, une fonction de lecteur de sons. Si l'utilisateur choisit un morceau musical ou une chanson ou un bruit qu'il a plaisir à entendre, ce choix permet de compenser le désagrément souvent ressenti lorsque retentit une alarme d'un téléphone.

Dans le mode de réalisation préféré de l'invention, les signaux sonores emmagasinables dans la mémoire ont une bande passante d'au moins 1 kHz, de préférence allant jusqu'à 20 kHz. On peut ainsi faire appel à une grande diversité de signaux sonores et donc réaliser une réelle personnalisation des appels. En outre, une bande passante de valeur suffisante permet au téléphone portable de jouer pleinement son rôle de lecteur de sons.

La mémoire amovible, si elle est enregistrable, peut être téléchargée par liaison téléphonique classique ou par téléphone portable ou encore par liaison avec un micro-ordinateur, ou par le son provenant d'un microphone. Ce son peut provenir aussi d'une autre source sonore telle qu'un lecteur de cassettes, de disques CD ou MD, un poste de radio ou télévision, etc.

La mémoire pour le signal sonore personnalisé est par exemple d'une capacité suffisante pour produire des signaux sonores couvrant une bande passante de fréquences s'étendant sur au moins 4 à 10 kHz et d'une durée minimale de 8 secondes. Par bande passante d'au moins 4 à 10 kHz on entend que le signal sonore peut s'étendre, si le spectre part de zéro, sur un spectre s'étendant de 0 à 4 kHz et pouvant aller jusqu'à 10 kHz. Le spectre peut bien entendu s'étendre jusqu'à la limite audible soit 20 kHz environ.

La mémoire est avantageusement du type statique par exemple une mémoire EPROM.

Le signal sonore personnalisé peut prendre toute forme voulue par l'utilisateur ou le distributeur : morceau de musique ou de chant, message verbal, bruitage, et peut notamment identifier l'utilisateur en prononçant son nom.

Avantageusement, ce signal est tel qu'il puisse être répété sans que l'auditeur ressente une différence lors du retour de la fin du signal vers son début. A cet effet, la fin du message est analogue à son début. De toute façon, il est préférable que ce signal puisse être répété, le dispositif étant capable de répéter indéfiniment le signal (lecture en boucle).

Les mémoires de signal sonore peuvent être du type ROM préenregistrées et distribuées comme des disques CD par exemple. Elles peuvent être aussi du type enregistrable une ou plusieurs fois de façon que l'utilisateur puisse former sa propre alarme sonore et 1a modifier éventuellement, cette modification pouvant être effectuée par téléchargement comme indiqué ci-dessus.

Dans le cas où la mémoire est enregistrable, le dispositif comprend une entrée pour la source sonore.

Pour permettre une distribution aisée de la mémoire préenregistrée ou enregistrable selon l'invention, celle-ci est disposée dans un boîtier, par exemple du type normalisé, muni d'un connecteur électrique de raccordement à un dispositif d'alarme sonore. De préférence, cette mémoire est associée, dans un même boîtier, à un codeur et/ou décodeur.

Dans une réalisation, le dispositif selon l'invention est physiquement indépendant du téléphone portable, sans liaison filaire. Il ne lui est relié que par réception radioélectrique de faible sensibilité, de préférence à large bande passante. Ce dispositif s'installe à proximité du portable dont il peut détecter son état d'appel et, du fait de sa faible sensibilité, ne détecte pas les émissions provenant des émetteurs ou de téléphones portables qui se trouvent au-delà d'une courte distance, par exemple de l'ordre du mètre.

Dans les systèmes GSM et DCS 1800, le téléphone portable, lorsqu'il est sous tension, communique en permanence avec l'émetteur local le plus proche avec une fréquence déterminée. Entre le déclenchement de l'alarme et la prise d'appel, la fréquence de communication est différente. Le dispositif selon l'invention est sensible à la fréquence de communication du portable quand ce dernier reçoit un appel. Cette fréquence est en général de quelques centaines de Hertz. En d'autres termes le dispositif est capable de reconnaître les signaux émis par le portable lorsque ce dernier reçoit un appel, avant la prise de ligne. De préférence, une temporisation est prévue pour que la détection ne fonctionne que lorsque les signaux à 1a fréquence à détecter ont une durée suffisante. Cette temporisation maintient l'état d'appel pendant d'éventuels intervalles de silence entre les signaux à détecter.

Dans cette réalisation il est avantageux que le dispositif soit sensible seulement à la fréquence, au niveau et à la durée de la modulation sans lire le message, afin qu'il soit compatible avec tous les types de téléphones portables.

Dans ce mode de réalisation, le dispositif peut être contenu dans un boîtier indépendant du téléphone portable. L'utilisateur garde alors le dispositif dans sa poche ou le fixe à la ceinture. Le dispositif peut aussi se fixer de manière mécanique au téléphone portable. Dans une version plate, il peut être contenu dans la housse du téléphone portable.

Dans une autre réalisation, le dispositif est intégré au téléphone portable tout en permettant, de préférence, l'accès à un module enfichable et interchangeable contenant la mémoire. Dans ce type de réalisation, le dispositif est en liaison électrique avec les éléments fonctionnels du téléphone portable.

L'état de la technique considéré :
- GB-A-2 245 091 décrit des messages sonores personnalisés stockés sur une mémoire non-amovible.
- GB-A-2 267 794 et EP-A-0 538 933 décrivent des mémoires amovibles pour téléphones portables constituées par des modules SIM.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'un téléphone portable et des signaux émis et reçus,
la figure 2 est un schéma représentant un dispositif selon l'invention,
la figure 3 est un schéma du boîtier de téléphone portable selon l'invention, et
la figure 4 est un schéma analogue à celui de la figure 3 pour deux variantes.

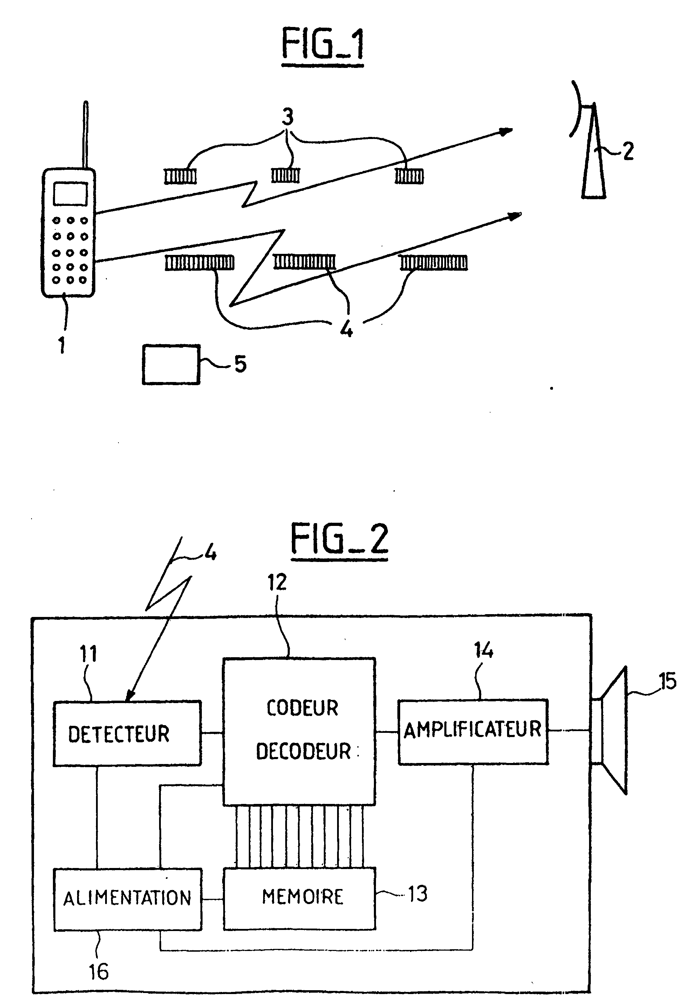

Le téléphone portable 1 représenté sur la figure 1 communique avec un émetteur/récepteur 2, en général par des signaux 3 à hautes fréquences. Par contre pendant la phase d'accusé de réception d'appel et avant la prise de ligne, le portable émet des signaux 4 de fréquences plus basses. Le dispositif 5, objet de l'invention, est sensible à ces fréquences basses. Un temporisateur (non montré) empêche que le dispositif soit sensible à des signaux de faible durée. Pendant la période de détection d'appel, le dispositif 5 déclenche un message préenregistré.

Le dispositif 5 (figure 2) reçoit le signal 4 grâce à un détecteur 11 et, pendant la durée de ce signal, autorise le fonctionnement d'un codeur/décodeur 12 qui lit le contenu d'une mémoire amovible 13, décode les informations qu'elle contient, et délivre un son à un amplificateur 14 alimentant un haut-parleur 15 du dispositif.

En variante, le codeur/décodeur 12 (ou le décodeur seul) et la mémoire 13 forment un seul circuit contenu dans un élément enfichable, muni de connecteurs permettant une liaison électrique avec les autres éléments du dispositif.

Dans ce cas, on peut utiliser des mémoires préenregistrées avec des bandes passantes variables. Pour une même capacité de mémoire, un son de large bande passante aura une durée plus faible qu'un son de plus faible bande passante. Pour permettre une fabrication en grande série tout en tenant compte de cette possibilité de variation de la bande passante, on prévoit un décodeur identique pour tous les sons enregistrables, mais avec une fréquence d'échantillonnage variable dans le cas où les signaux sonores sont de type numérique.

La mémoire 13 contient un message sonore personnalisé qui, dans l'exemple, est une identification du titulaire du portable. Par exemple ce message indique "Appel pour monsieur X", X étant le nom du titulaire ou son prénom.

La mémoire peut aussi être du type préenregistré pour être fabriquée en série.

Le message enregistré, s'il est court, est répété jusqu'à la prise de ligne.

Pour permettre un tel message personnalisé il est nécessaire que la bande passante du signal sonore enregistré soit suffisante. Cette bande est au minimum de 1KHz. Pour des messages relativement sophistiqués, tels que de la musique, une bande passante pouvant atteindre 15 à 20 kHz est préférable.

Dans l'exemple montré sur la figure 2, le dispositif 5 comporte son alimentation propre 16 pour le détecteur 11, le codeur/décodeur 12, la mémoire 13 et l'amplificateur 14.

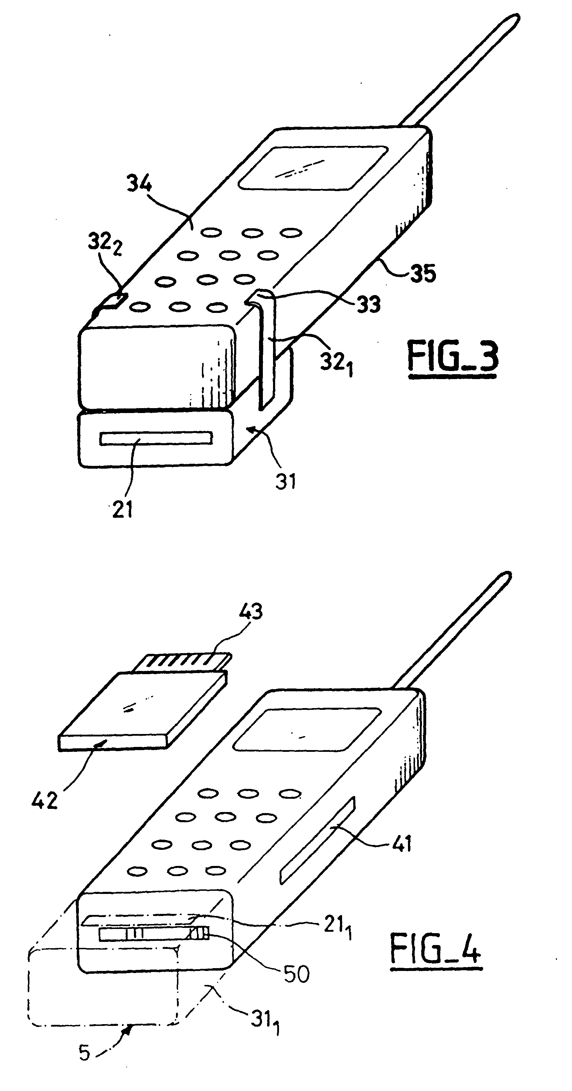

La figure 3 présente une vue en perspective d'un téléphone portable et d'un boîtier 31 contenant le dispositif électriquement indépendant du téléphone portable mais qui lui est accroché mécaniquement par un clipsage 32. Dans l'exemple, le boîtier 31 du dispositif comprend, sur deux parois latérales, des pattes élastiques 32₁ et 32₂ se terminant par des retours 33 s'appuyant contre la face frontale 34 du portable, alors que le boîtier 31 s'appuie contre la face arrière 35 du portable.

La figure 3 montre aussi que le boîtier 31 présente un orifice 21, en forme de fente, pour l'introduction d'un module à mémoire (non montré sur la figure 3). Dans cette réalisation il est avantageux que le dispositif soit sensible seulement à la fréquence et, éventuellement, au niveau et à la durée de la modulation sans lire le message, afin qu'il soit compatible avec tous les types de téléphones portables.

Dans l'exemple représenté sur la figure 4, le dispositif est intégré au téléphone portable. Cette figure 4 est une vue en perspective cavalière d'un téléphone portable dont le boîtier présente un orifice 41, sur une paroi latérale, permettant d'enficher un module 42 muni d'un connecteur 43 et contenant la mémoire.

Dans une variante, pour laquelle le boîtier 31₁ (représenté en trait mixte sur la figure 4) est distinct du boîtier du portable, le dispositif d'alarme sonore 5 tire son alimentation de celle du téléphone portable. Dans ce cas on aura avantage à prévoir pour le dispositif 5 un connecteur (non montré) s'adaptant au connecteur existant 50 à l'extrémité inférieure du portable. Dans cette hypothèse, on peut prévoir, pour la détection des appels, une connexion directe (non hertzienne) entre le dispositif 5 et le portable, le connecteur 50 assurant, de façon en soi connue, une liaison électrique des diverses fonctions du portable à des circuits extérieurs. Ce dispositif 5 présente, par ailleurs, comme celui décrit en liaison avec la figure 3, une fente 21₁, destinée à recevoir une mémoire amovible.

## Revendications

1. Dispositif d'alarme sonore pour téléphone portable ou récepteur de messages comportant une mémoire (13) destinée à contenir un message sonore, personnalisé ou personnalisable, **caractérisé en ce que** ladite mémoire (13) est amovible.

2. Dispositif selon la revendication 1, **caractérisé en ce que** la mémoire est munie de connecteurs électriques (43) permettant de l'enficher à un connecteur.

3. Dispositif selon la revendication 1 ou 2, **caractérisé en ce que** la mémoire est de type préenregistré.

4. Dispositif selon la revendication 1 ou 2, **caractérisé en ce que** la mémoire est enregistrable.

5. Dispositif selon l'une quelconque des revendications précédentes, **caractérisé en ce que** la bande passante du message sonore est d'au moins 1 kHz.

6. Dispositif selon la revendication 5, **caractérisé en ce que** la bande passante est comprise entre 1 et 20 kHz.

7. Dispositif selon l'une quelconque des revendications précédentes, **caractérisé en ce que** le message sonore représente l'identité du titulaire du téléphone portable associé.

8. Dispositif selon la revendication 4, **caractérisé en ce que** la mémoire est enregistrable soit par téléchargement, par exemple à l'aide de la ligne du téléphone portable associé, soit à l'aide d'un microphone ou d'une autre source sonore.

9. Dispositif selon la revendication 4 ou 8, **caractérisé en ce que** la mémoire est du type statique, par exemple EPROM.

10. Dispositif selon l'une quelconque des revendications précédentes, **caractérisé en ce que** la mémoire est associée à un décodeur et/ou codeur, l'ensemble constitué par la mémoire et le codeur et/ou décodeur étant amovible.

11. Dispositif selon l'une quelconque des revendications précédentes, **caractérisé en ce qu'**il est intégré au boîtier du téléphone portable associé.

12. Dispositif selon l'une quelconque des revendications 1 à 10, **caractérisé en ce qu'**il comporte un boîtier (31) distinct du boîtier du téléphone portable associé.

13. Dispositif selon la revendication 12, **caractérisé en ce qu'**il comporte un connecteur destiné à être associé au connecteur (50) du téléphone portable associé de façon à tirer son alimentation du portable et à détecter l'appel.

14. Dispositif selon la revendication 12 ou 13, **caractérisé en ce qu'**il comporte des moyens (32₁, 32₂) pour assembler son boîtier (31) au boîtier du téléphone portable.

15. Dispositif selon la revendication 12, 13 ou 14, **caractérisé en ce qu'**il comporte une détection du signal d'accusé de réception d'appel émis par le téléphone portable associé.

16. Dispositif selon la revendication 15, **caractérisé en ce que** la détection n'est sensible qu'à une émission proche, inférieure à une distance prédéterminée, par exemple de l'ordre d'un mètre.

17. Boîtier mémoire amovible pour téléphone portable ou récepteur de messages comportant un boîtier, un connecteur électrique et une mémoire, **caractérisé en ce que** le connecteur électrique est raccordable à un dispositif d'alarme sonore pour téléphone portable, et **en ce que** la mémoire contient un message sonore personnalisé ou personnalisable.

18. Boîtier mémoire selon la revendication 17, **caractérisé en ce qu'**il comprend un codeur ou un décodeur dans le boîtier.

## Patentansprüche

1. Tonalarmvorrichtung für ein tragbares Telefon oder einen Nachrichtenempfänger, mit einem Speicher (13), welcher zur Aufnahme einer für eine Person bestimmten oder bestimmbaren akustischen Nachricht vorgesehen ist, **dadurch gekennzeichnet, dass** der Speicher (13) herausnehmbar ist.

2. Vorrichtung nach Anspruch 1, **dadurch gekennzeichnet, dass** der Speicher mit elektrischen Kontakten (43) zum Einstecken in eine Verbindungsvorrichtung versehen ist.

3. Vorrichtung nach Anspruch 1 oder 2, **dadurch gekennzeichnet, dass** der Speicher ein Festwertspeicher ist.

4. Vorrichtung nach Anspruch 1 oder 2, **dadurch gekennzeichnet, dass** der Speicher frei wählbar programmierbar ist.

5. Vorrichtung nach einem der Ansprüche 1 bis 4, **dadurch gekennzeichnet, dass** das Durchlassband der akustischen Nachricht mindestens 1 kHz beträgt.

6. Vorrichtung nach Anspruch 5, **dadurch gekennzeichnet, dass** das Durchlassband zwischen 1 und 20 kHz liegt.

7. Vorrichtung nach einem der Ansprüche 1 bis 6, **dadurch gekennzeichnet, dass** die akustische Nachricht die Identität des Inhabers des zugehörigen tragbaren Telefons repräsentiert

8. Vorrichtung nach Anspruch 4, **dadurch gekennzeichnet, dass** der Speicher entweder über Download, beispielsweise über eine Verbindung zu dem zugehörigen tragbaren Telefon, oder mittels Mikrofon oder einer anderen akustischen Quelle frei wählbar programmierbar ist.

9. Vorrichtung nach Anspruch 4 oder 8, **dadurch gekennzeichnet, dass** der Speicher ein nicht-flüchtiger Speicher, beispielsweise ein EPROM, ist.

10. Vorrichtung nach einem der Ansprüche 1 bis 9, **dadurch gekennzeichnet, dass** der Speicher einem Decoder und/oder Encoder zugeordnet ist, wobei die von dem Speicher und dem Encoder und/oder dem Decoder gebildete Einheit herausnehmbar ist.

11. Vorrichtung nach einem der Ansprüche 1 bis 10, **gekennzeichnet durch** seinen Einbau in das Gehäuse des zugehörigen tragbaren Telefons.

12. Vorrichtung nach einem der Ansprüche 1 bis 10, **gekennzeichnet durch** ein Gehäuse (31), welches getrennt von dem Gehäuse des zugehörigen tragbaren Telefons ist.

13. Vorrichtung nach Anspruch 12, **gekennzeichnet durch** eine Verbindungsvorrichtung, welche zum Anschluss an eine Verbindungsvorrichtung (50) des zugehörigen tragbaren Telefons vorgesehen ist, derart, dass die Vorrichtung ihre Stromversorgung aus dem tragbaren Telefon entnimmt und den Anruf detektiert.

14. Vorrichtung nach Anspruch 12 oder 13, **gekennzeichnet durch** Mittel (32₁, 32₂) zum Montieren des Gehäuses (31) an dem Gehäuse des tragbaren Telefons.

15. Vorrichtung nach Anspruch 12, 13 oder 14, **gekennzeichnet durch** eine Erkennung des vom zugehörigen tragbaren Telefon gesendeten Anzeigesignals für den Empfang eines Anrufs.

16. Vorrichtung nach Anspruch 15, **dadurch gekennzeichnet, dass** die Erkennung nur auf eine nahe, unter einer vorbestimmten Distanz, beispielsweise ein Meter, liegende Übertragung anspricht.

17. Abnehmbares Speichergehäuse für ein tragbares Telefon oder einen Nachrichtenempfänger, mit einem Gehäuse, einer elektrischen Verbindungsvorrichtung und einem Speicher, **dadurch gekennzeichnet, dass** die elektrische Verbindungsvorrichtung an eine Tonalarmvorrichtung für das tragbare Telefon anschließbar ist und dass der Speicher eine für eine Person bestimmte oder bestimmbare akustischen Nachricht enthält.

18. Speichergehäuse nach Anspruch 17, **gekennzeichnet durch** einen in dem Gehäuse vorhandenen Encoder oder Decoder.

## Claims

1. An audible alarm device for a cellular phone or message receiver comprising a memory (13) for containing an audible customized or customizable message **characterized in that** the memory (42) is removable.

2. The device according to claim 1, **characterized in that** the memory is fitted with electric connectors (43) allowing it to be plugged into a connector.

3. The device according to claim 1 or 2, **characterized in that** the memory is of prerecorded type.

4. The device according to claim 1 or 2, **characterized in that** the memory is recordable.

5. The device according to any of the preceding claims, **characterized in that** the bandwidth of the audible message is at least 1 kHz.

6. The device according to claim 5, **characterized in that** the bandwidth is comprised between 1 and 20 kHz.

7. The device according to any of the preceding claims, **characterized in that** the audible message represents the identity of the owner of the associated cellular phone.

8. The device according to claim 4, **characterized in that** the memory is recordable either by downloading, e.g. using the line of the associated cellular phone, or using a microphone or another sound source.

9. The device according to claim 4 or 8, **characterized in that** the memory is of static type, e.g. an EPROM.

10. The device according to any of the preceding claims, **characterized in that** the memory is associated with a decoder and/or a coder, the unit composed of the memory and the coder and/or decoder being removable.

11. The device according to any of the preceding claims, **characterized in that** it is integrated in the case of the associated cellular phone.

12. The device according to any of claims 1 to 10, **characterized in that** it comprises a case (31) different from the case of the associated cellular phone.

13. The device according to claim 12, **characterized in that** it includes a connector to be associated with the connector (50) of the associated cellular phone in order to be powered by the mobile and detect the call.

14. The device according to claim 12 or 13, **characterized in that** it includes a means (32₁, 32₂) for mounting its case (31) onto the case of the cellular phone.

15. The device according to claim 12, 13 or 14, **characterized in that** it includes detection of the call acknowledgement signal transmitted by the associated cellular phone.

16. The device according to claim 15, **characterized in that** the detection is responsive only to a nearby transmission, nearer than a predetermined distance, e.g. in the order of one meter.

17. Removable memory case unit for a cellular phone or message receiver comprising a case, an electric connector and a memory, **characterized in that** the electric connector is connectable to an audio alarm device for cellular phone and **in that** the memory contains a customized or customizable audio message.

18. The memory case unit according to claim 18, **characterized in that** it is associated, in a same case, with a coder and/or decoder.
